(19) Europäisches Patentamt
European Patent Office
Office européen des brevets

(11) Publication number: **0 136 696**
**A2**

(12) **EUROPEAN PATENT APPLICATION**

(21) Application number: 84111766.6

(51) Int. Cl.⁴: G 02 F 1/137

(22) Date of filing: 03.10.84

(30) Priority: 03.10.83 US 538523

(43) Date of publication of application:
10.04.85 Bulletin 85/15

(84) Designated Contracting States:
AT BE CH DE FR GB IT LI LU NL SE

(71) Applicant: POLAROID CORPORATION
549 Technology Square
Cambridge, Massachusetts 02139(US)

(72) Inventor: Rogers, Howard G.
20 Newton Street
Weston, Mass.(US)

(72) Inventor: Chang, Kuang Chou
34 Bridge Street
Lexington, Mass.(US)

(72) Inventor: Norland, Kenneth S.
22 Dexter Road
Lexington, Mass.(US)

(74) Representative: Reitzner, Bruno, Dr. et al,
Patentanwälte Dipl.-Ing. R. Splanemann Dr. B. Reitzner
Tal 13
D-8000 München 2(DE)

(54) **Stereo imaging system and a liquid crystal cell therefor.**

(57) A stereo imaging system and liquid crystal polarizer therefor includes a television transmitter that transmits a succession of right and left perspective images of a subject to a receiver that displays the right and left perspective images on the screen of a CRT. A fixed polarizer polarizes the CRT images along a first, fixed transmission plane, and a switchable liquid crystal cell alternately rotates the transmission plane between the first, fixed alignment and a second, orthogonal alignment in synchronism with the display of the right and left perspective images on the CRT screen. A viewer wears viewing spectacles in which each of the two eyepieces is provided with an analyzer material with orthogonal transmission plane alignments so that the right and left perspective images will be presented to the right and left eyes of the viewer to provide a three dimensional composite perception. The liquid crystal cell includes a liquid crystal material of the twisted nematic type that is doped with a chiral material to provide rise and switching response times substantially less than the duration of half of the television image frame to permit the fabrication of large area, fast-switching, twisted nematic liquid crystal cells suitable for use in steroscopic TV or computer video graphics systems.

EP 0 136 696 A2

STEREO IMAGING SYSTEM AND A LIQUID CRYSTAL CELL THEREFOR

0136696

## BACKGROUND OF THE INVENTION

### Field of the Invention

The present invention relates to three dimensional or stereoscopic imaging systems and, more particularly, to such systems in which a liquid crystal cell having a switchable transmission plane is utilized with an image-producing screen to provide the viewer with the perception of a stereo or three dimensional image.

### Description of the Prior Art

Stereoscopic or three dimensional television imaging systems have been described in which a television camera or cameras provide right and left perspective images of the same subject from slightly different viewing angles and transmits these images in alternating succession to a receiver which then alternately reproduces the successive right and left perspective images on an imaging surface, such as the screen of a cathode-ray tube or the screen of a rear projection type television receiver. A polarizer generally overlies the image-producing surface and polarizes the successive right and left perspective images along a first, fixed transmission plane. A switchable liquid crystal cell overlies the polarizer and is electrically operable to rotate its transmission plane between the first, fixed alignment and a second, orthogonal alignment in synchronism with the transmission of the right and left perspective image frames. The liquid crystal cell is typically fabricated with a liquid crystal material of the twisted nematic type that is selectively excitable by the application of a voltage potential to rotate the transmission plane between the first, fixed alignment and the second, orthogonal alignment in synchronism with the transmission of the right and left perspective images.

In systems of this type, the switching time of the liquid crystal cell, both the rise time and decay time, for rotating the transmission plane between the two orthogonal alignments can be sufficiently high to adversely affect the ability of the system to provide the desired stereoscopic perception.

In the United States, the standard TV signal contains sufficient information to generate 30 image frames of 525 lines each per second with approximately 33 milliseconds allotted to each frame. Each frame comprises two interlaced fields (or half frames) with each field or half frame allotted 17 milliseconds or so. In prior liquid crystal cells, the transistion time for the liquid crystal material to switch between its two orthogonal transmission alignments has been on the order of 20 milliseconds or longer. As can be appreciated, such slow switching times can mitigate against the production of the desired stereoscopic perception on the part of the viewer.

Because of the recognized slow switching response, it has been suggested in the stereoscopic television application that the liquid crystal cell be divided into upper and lower halves so that the upper half can be switched during or shortly after the scanning of the upper portion of the image frame and the lower half switched during or shortly after the scanning of the lower portion of the frame to accommodate the acknowledged long switching time of the prior liquid crystal cells in this application. The suggested upper and lower division of the liquid crystal cell has limited efficacy where the displayed image is generated by an interlaced raster pattern, as is the case in many television transmission schemes.

In addition to the above-mentioned switching time drawbacks, difficulties have been encountered in fabricating large area liquid crystal cells (as contrasted to small area liquid crystal displays, used, for example, in wrist watches) having a surface area equal to that of presently used

cathode-ray tubes and projection TV's. As the cell's surface area is increased, greater difficulty is encountered in establishing a uniform liquid crystal cell thickness. Variations in cell thickness adversely affect desired switching response time.

## SUMMARY OF THE INVENTION

In view of the above, it is a primary object of the present invention, among others, to provide a three dimensional or stereoscopic imaging system that utilizes a liquid crystal cell in which the transmission plane is rotatable between two orthogonal alignments with switching times that are substantially lower than those of prior liquid crystal cells and sufficiently low to provide a high level of stereo or three dimensional perception on the part of the viewer. Additionally, it is an object of the present invention to provide a large area liquid crystal cell where switching times are uniformly low at room temperature and are independent of cell thickness over a useful thickness and area range.

In accordance with these primary objects, and others, the present invention provides for a stereoscopic or three dimensional imaging system in which an imaging device, such as a television receiver or a computer-driven video terminal, alternately produces right and left perspective images of a subject. A polarizer overlying the imaging surface polarizes the right and left perspective images along a first, fixed transmission plane. A fast-switching liquid crystal cell overlying the polarizer alternately rotates the transmission plane of the polarized images from the first, fixed transmission alignment to a second, orthogonal transmission alignment in synchronism with the production of the right and left perspective images. A viewer wears spectacles in which a first eyepiece is defined by an analyzer material having a transmission plane aligned substantially parallel to the first transmission plane, and a second eyepiece defined by an analyzer material having its transmission plane aligned orthogonal to the first transmission plane. The viewer accordingly perceives the alternate left and right perspective images as a single image having the desired three dimensional effect. The liquid crystal cell is of the twisted

nematic type and includes a liquid crystal material doped with a chiral material. The amount of chiral material utilized in the liquid crystal cell will be an amount effective to reduce the switching response time of the cell to a value substantially less than the time allotted for each of the half frames. It will be appreciated that the time allotted to each half frame will depend upon the particular video system contemplated and the frequency of the raster pattern. For example, in the case of a TV signal generating 30 image frames (60 half frames) per second, each field or half frame will be allotted about 17 milliseconds and, accordingly, the chiral additive will be employed in the liquid crystal cell in an amount sufficient to provide a switching response time substantially less than about 17 milliseconds. Where, for example, computer generated graphic images are supplied to a CRT display in the mode of 45 image frames per second (90 half frames), the chiral material will be employed in the liquid crystal cell in an amount sufficient to provide a switching response time substantially less than about 11.1 milliseconds.

The combination of the twisted nematic liquid material with the chiral material has been found to provide a liquid crystal cell having rapid switching speeds at room temperature that permit the realization of desired stereoscopic perception. It has been found, for example, that a liquid crystal cell having a switching response time of 3 milliseconds can be provided by utilization of a chiral material in a liquid crystal cell thereof. In addition, the liquid crystal cell possesses an acceptable contrast ratio (at least 10:1) and both the switching response time and the contrast ratio are cell thickness independent in the range of 10 to 50 microns. This allows the use of inexpensive cell substrate materials for making large area liquid crystal cells.

In general, the liquid crystal material will be doped with a minor amount of the chiral additive that will vary with the nature of the particular nematic liquid crystal material, the nature of the chiral material, and the particular system utilized and the requirements thereof. Good results can be obtained, for example, using from about 1% to about 1.4% by weight of the chiral material. A preferred amount is about 1.2% by weight.

---

BRIEF DESCRIPTION OF THE FIGURES

FIG. 1 is a schematic, block diagram of an exemplary three dimensional or stereoscopic television transmission system;

FIG. 2 is a schematic, block diagram of a stereo television receiver and viewing system;

FIG. 3A, B, and C represent a timing diagram for the receiver system shown in FIG. 2;

FIG. 4 is a partial isometric view of a liquid crystal cell in accordance with the present invention;

FIG. 5A represents the chemical formula of a nematic liquid crystal compound; and,

FIG. 5B represents the chemical formula of a chiral additive to be mixed with the nematic liquid crystal material of the type represented by the formula in FIG. 5A to provide desirably enhanced switching times for the liquid crystal cell.

DESCRIPTION OF THE PREFERRED EMBODIMENT

A stereoscopic or three dimensional imaging system in accordance with the present invention is shown in schematic, block diagram form in FIGS. 1 and 2, with FIG. 1 showing an exemplary television transmission system, generally designated by the reference character 10, and FIG. 2 illustrating a combined television receiver and viewing system, generally designated by the reference character 100. The transmission system 10 transmits, in a successive sequential manner, right and left perspective images of the subject S while the receiving and viewing system 100 presents the successive right and left images to a viewer (not shown) wearing viewing spectacles G described more fully below. The transmission system includes a right perspective video camera $C_R$ and a left perspective video camera $C_L$ that are separated from one another by a selected separation distance and which provide right perspective and left perspective video signals, $V_R$ and $V_L$, to a switching device such as a multiplexer 12 which, in turn, provides the multiplexed video output to a video transmitter 14, of conventional design, for transmission through an antenna 16. A clock circuit 18 provides an output pulse train to both the multiplexer 12 and to a control signal section of the transmitter 14. The clock 18 provides a bi-state signal which, in one state, causes the multiplexer 12 to switch one of the two video input signals to the multiplexer output and, in the other state, to switch the other of the two video input signals to the multiplexer output. As shown in FIG. 1, the binary high value is assigned to switching the left perspective signal $V_L$ to the output of the multiplexer 12 and the binary low value is assigned to switching the right perspective video signal $V_R$ to the output of the multiplexer. The duration of the pulses provided by the clock 18 and their spacing is sufficient so that a complete video half frame pattern can be transmitted during the time the multiplexer 12 is in each of its two switching

states. The output of the multiplexer 12, which represents a sequential succession of right perspective and left perspective video signals $V_R$ and $V_L$ is presented to the video transmitter portion of the transmitter 14 which transmits the signal in the conventional manner through the antenna 16. The frame-synchronizing timing pulses provided by the clock 18 can be superposed onto the video signal or transmitted on a separate carrier as is known in the art. The video signals transmitted are assumed to contain a full complement of image-forming signals for black and white and/or color imaging and, additionally, an audio carrier signal.

The transmission system shown in FIG. 1 is an exemplary system for transmitting a succession of alternate right and left perspective images of the subject S. Other systems are suitable for such purposes including systems utilizing a single camera with right and left perspective stereo-optic systems and rotatable mirrors or prisms that successfully direct the image output of the right and left perspective optical systems into the camera for subsequent transmission.

The combined receiver and viewing system 100 of FIG. 2 includes a receiver 102 that receives the transmitted signal through an antenna 104 and provides a video output to a cathode-ray tube CRT which displays the alternate right and left perspective images on its display surface. Other equallly suitable image displaying devices can be used, such as rear-screen projection systems, solid-state panel-type displays, and the like. A polarizer P and a liquid crystal cell LCC are provided in an overlying relationship with the CRT display surface. Additionally, a switching device such as a synchronizer 106 is connected to the liquid crystal cell LCC to control the alignment of its transmission plane as described more fully below.

The receiver 100 receives the succession of sequentially transmitted right and left perspective video signals and the associated frame timing signal transmitted by the transmitter 10 in a conventional manner and provides the

successive right and left perspective video imaging signals $V_R$ and $V_L$ to the cathode-ray tube CRT which, in turn, displays the successive right and left perspective images on its screen, as is conventional in the art. The fixed polarizer P has a surface area at least coextensive with that of the screen of the cathode-ray tube CRT and overlies the cathode-ray tube to initially polarize the successively displayed right and left perspective images along a preferred transmission plane, such as the substantially vertical transmission alignment shown in FIG. 2.

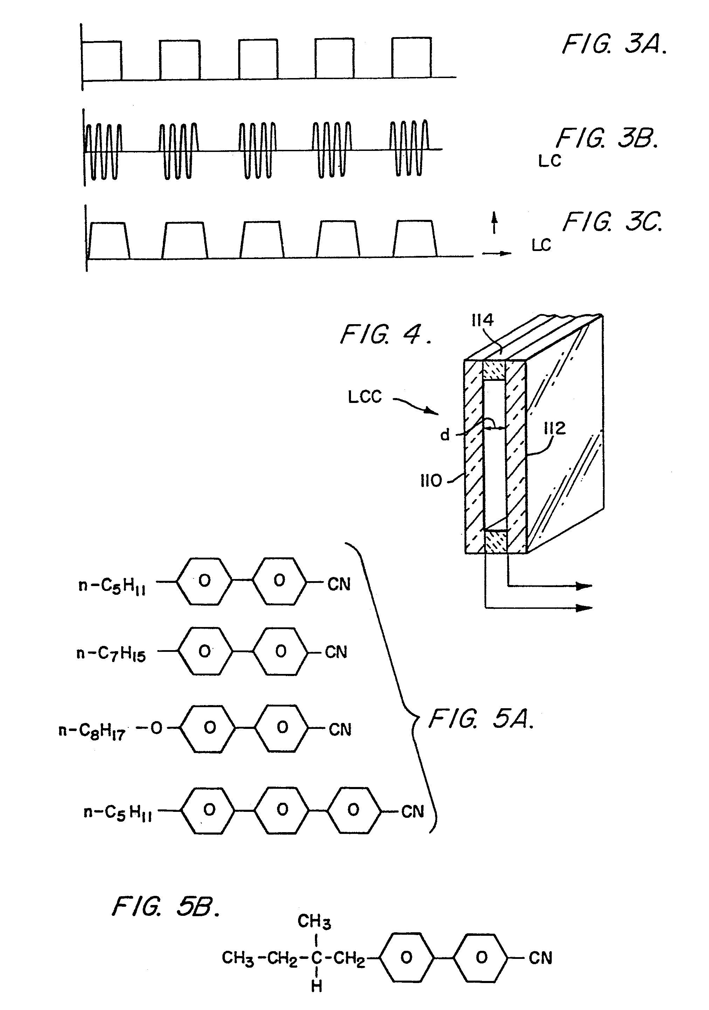

The switchable liquid crystal cell LCC has an area at least coextensive with that of the polarizer P and the screen of the cathode-ray tube CRT and is positioned in front of and in an overlying relationship with the polarizer P. As described in more detail below in relationship to FIG. 4, the switchable liquid crystal cell LCC includes a controllable liquid crystal of the twisted nematic type and has a transmission plane that can be selectively rotated or switched between a first alignment substantially parallel to the transmission plane of the polarizer P and a second alignment which is orthogonal to the first transmission plane. The switchable liquid crystal cell LCC is controlled by the synchronizer 106 which receives the frame-synchronized control pulses from the receiver 102 and alternately switches power from a power supply PS to the switchable liquid crystal cell LCC.

As described above, the system of FIGS. 1 and 2 provides a three-dimensional television display of the transmitted signals as provided through the antenna 104 of the receiver 102. In accordance with another embodiment of the present invention, a computer C (phantom line illustration in FIG. 2) provides computer-generated video signals through a separate input, for example, for display by a cathode-ray tube. The computer generates a succession of right perspective and left perspective images of the subject matter to be displayed,

which images are displayed in a manner similar to that of the above-described television system. Thus, the cathode-ray tube, whether driven by television type signals or computer-generated videographic signals, in combination with the polarizer P, the liquid crystal cell LCC, and the switching synchronizer 106 can be used to provide three-dimensional image displays.

A timing diagram for the combined receiver and viewing system 100 of FIG. 2 is illustrated in FIGS. 3A, 3B, and 3C. FIG. 3A represents the bi-state frame-synchronized timing pulses that are generated by the clock 18 in the transmitter 10, transmitted to the receiver 102, and utilized by the synchronizer 106 to switch the switchable liquid crystal cell LCC. Where a computer-generated video signal is utilized, the timing pulses can be generated by the computer. In FIGS. 1 and 2, the binary high value has been arbitrarily assigned to the left perspective video signal $V_L$ and the binary low value to the right perspective video signal $V_R$. The timing pulses are provided from the receiver 102 to the synchronizer 106 which, in turn, alternately applies supply power, such as a 500Hz, 30 volts peak-to-peak alternating current waveform, as shown in FIG. 3B, to the switchable liquid crystal polarizer P2. With the application and removal of switching voltage, as described more fully below, the transmission plane of the liquid crystal cell LCC rotates between the first alignment parallel to the transmission plane of the first polarizer P and an orthogonal alignment represented by the dotted line arrow in FIG. 2. Because of the recognized discrete rise and decay transition times required to effect transmission plane rotation after the application and removal of the switching voltage (FIG. 3B), the leading and trailing edges of the pulses of FIG. 3C are inclined. As explained below, the liquid crystal cell LCC is fabricated so that its switching time, in contrast to prior liquid crystal cells, is substantially less to provide relatively quick

transition times that are an acceptably small fraction of the total half frame display time.

As can be appreciated from the foregoing, images of the first perspective, such as the left perspective, are presented to the viewer with the transmission plane of the liquid crystal cell LCC aligned in the first direction and images of the other perspective, that is, the right perspective, are presented to the viewer when the transmission plane of the liquid crystal cell LCC is switched or rotated to the other, orthogonal alignment. The spectacles or visors G worn by the viewer have eyepieces formed from analyzer materials in which the transmission planes are orthogonal to one another so that the viewer, through one eye, sees left perspective images and, through the other eye, sees right perspective images with the result that the viewer perceives a composite three dimensional image.

The liquid crystal cell LCC, as shown in the partial isometric view of FIG. 4, includes first and second transparent plates 110 and 112, fabricated, for example, from glass, that are maintained in a spaced, substantially parallel relationship by an edge seal/spacer 114 of uniform thickness that is bonded, cemented, or otherwise secured to the plates 110 and 112. The plates 110 and 112 are spaced from one another by a dimension "d", generally between 10 and 50 microns.

The inner, facing surfaces of the plates 110 and 112 are provided with a substantially transparent conductive coating, such as indium-tin oxide alloy (ITO), to define a field-producing electrode pair E1 and E2. The glass plate with such coating can be purchased commercially from suppliers such as Optical Coating Laboratory, Inc. in Santa Rosa, CA 95402. Conductive coatings deposited on soda lime float and sheet glass, such as LC4004 from the Optical Coating Laboratory, can be used.

A liquid crystal material of the twisted nematic type and a switching speed-enhancing additive, as described more fully below in relationship to FIG. 5A and 5B, fills the space between the plates 110 and 112 to define a liquid crystal cell. In addition to the electrode pair formed on the plates 110 and 112, the inner facing surfaces of the plates are coated, as is known in the art, with a chemical alignment film having surface characteristics that are effective to control the alignment of the nematic crystal material adjacent to the plates. The chemical alignment film is deposited on the inner facing surfaces of the plates 110 and 112 in such a way that the nematic liquid crystal material, in the absence of an electrostatic director field, is twisted by $90^{\circ}$ so that any light polarized along a first transmission plane transmitted through the liquid crystal cell LCC will have its transmission plane rotated (that is, twisted) by $90^{\circ}$. As is known in the art, when excitation energy, such as the alternating voltage from the supply PS, is applied to electrodes E1 and E2, an electrostatic field is developed between the electrodes and has the effect of counteracting the aligning force provided by the chemical alignment film so that the liquid crystal molecules rotate perpendicular to the plates and thereby not rotate the transmission plane of the liquid crystal cell.

The liquid crystal material that fills the two plates is a mixture of a nematic liquid crystal material and a chiral material that is added to the nematic material. It has been found that the combination of the nematic liquid crystal material, such as liquid crystal materials designated as E7 and E18 and available from E.M. Chemicals, 5 Skyline Drive, Hawthorne, New York 10532, the formula of which is presented in FIG. 5A, and doped, for example, with 1.2% by weight of a chiral material, such as CB15, also from E.M. Chemicals, the formula of which is presented in FIG. 5B, provides a large area liquid crystal switchable cell having rise and decay

times of less than one millisecond (1ms.) and three milliseconds (3ms.), respectively. In addition, it appears that this relatively fast-switching feature is independent of cell thickness between a thickness range of 10 and 50 microns at room temperature. The indicated transition times represent an acceptably small fraction of the total half frame display time and permits the construction of an efficient three dimensional or stereoscopic television or computer graphics system. In addition, the liquid crystal cell has an acceptable contrast ratio (at least 10:1).

As can be appreciated by those skilled in the art, the present invention provides for a three dimensional or stereo imaging system in which alternate perspective image frames are displayed on an image screen with the displayed images polarized in a first direction and then presented to a switchable liquid crystal cell which is operated to rotate the plane of polarization between two different alignments in synchronism with the display of the alternate perspective image frames to provide the desired three dimensional visual effect. The switchable cell is defined by a liquid crystal cell that utilizes a liquid crystal material of the twisted nematic type advantageously doped with a chiral material to provide a liquid crystal cell having switching times that are acceptably low relative to the image frame duration to provide a high level of visual three dimensional perception and to provide a large area liquid crystal cell that can be constructed using inexpensive glass materials having no special requirements as to flatness.

As can be appreciated by those skilled in the art, various changes and modifications may be made to the disclosed embodiment without departing from the spirit and scope of the invention as defined in the appended claims and their legal equivalent.

0136696

# CLAIMS

1. A three dimensional television imaging system of the type viewable through analyzer visors, said system comprising:

a television signal imaging means for generating a succession of alternate perspective image frames of a subject polarized along a selected polarization plane;

a switchable liquid crystal cell connected to a controllable switching power means and switchable between a first polarizing alignment and a second polarizing alignment, said liquid crystal cell positioned relative to said imaging means to transmit alternate ones of said alternate perspective images along said first polarizing alignment and switchable by said switching power means to transmit the other of said alternate perspective images along said second polarizing alignment, said switching power means responsive to said imaging means to switch said liquid crystal cell in substantial synchronism with the generation of said alternate perspective images; and

said liquid crystal cell containing a liquid crystal material of the twisted nematic type doped with a chiral material in an amount effective to provide a liquid crystal cell having a switching response time sufficiently low in relation to the duration of said alternate perspective image frames to provide a high level of three dimensional perception.

2. The three dimensional television imaging system claimed in claim 1 wherein said liquid crystal material comprises a mixture of:

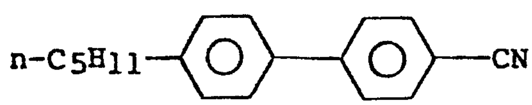

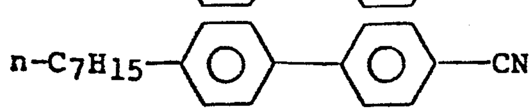

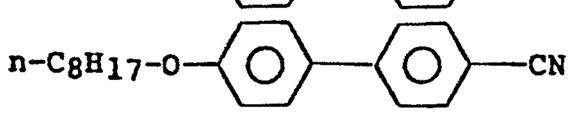

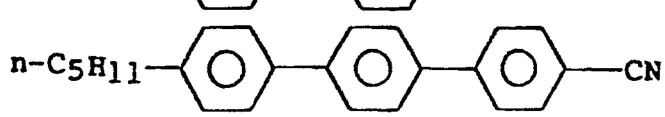

3. The three dimensional television imaging system claimed in claim 1 wherein said chiral material comprises:

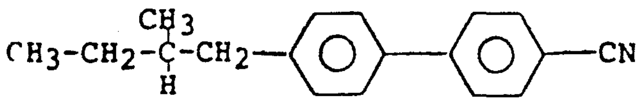

4. The three dimensional television imaging system claimed in anyone of claims 1 - 3 wherein said liquid crystal cell comprises:

first and second spaced, substantially parallel plates having respective conductive electrodes on the facing surfaces thereof and respective alignment films on the facing surfaces thereof for controlling the alignment of a nematic liquid crystal material therebetween;

a sealing means connected between said plates to define an internal cavity therebetween; and

a mixture of a twisted nematic liquid crystal material and from about 1% to about 1.4% by weight of a chiral material substantially filling the internal cavity.

5. The three dimensional television imaging system claimed in claim 4 wherein said plates are spaced from one another between 10 and 50 microns.

6. The three dimensional television imaging system claimed in anyone of claims1-5 wherein said television signal imaging means provides a raster pattern of interlaced imaging half frames at a frequency of about 30 to about 45 frames per second and said chiral material is employed in said liquid crystal cell in an amount sufficient to reduce the switching response time of said cell to a value substantially less than about 11.1 milliseconds.

7. The three dimensional television imaging system claimed in claim 6 wherein said switching response time is less than about 3 milliseconds.

8. A three dimensional computer graphics video imaging system of the type viewable through analyzer visors, said system comprising:

a computer graphics video imaging means for generating a succession of alternate perspective image frames of a subject polarized along a selected polarization plane;

a switchable liquid crystal cell connected to a controllable switching power means and switchable between a first polarizing alignment and a second polarizing alignment, said liquid crystal cell positioned relative to said imaging means to transmit alternate ones of said alternate perspective images along said first polarizing alignment and switchable by said switching power means to transmit the other of said alternate perspective images along said second polarizing alignment, said switching power means responsive to said imaging means to switch said liquid crystal cell in substantial synchronism with the generation of said alternate perspective images; and

said liquid crystal cell containing a liquid crystal material of the twisted nematic type doped with a chiral material in an amount effective to provide a liquid crystal cell having a switching response time sufficientlty low in relation to the duration of said alternate perspective image frames to provide a high level of three dimensional perception.

9. The three dimensional computer graphics video imaging system claimed in claim 8 wherein said liquid crystal material comprises a mixture of:

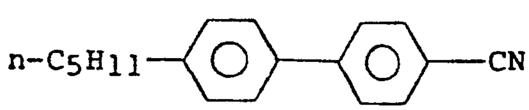

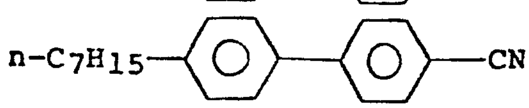

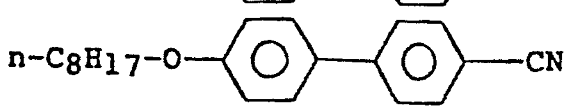

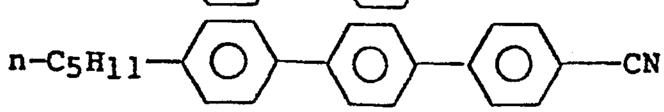

10. The three dimensional computer graphics video imaging system claimed in claim 8 wherein said chiral material comprises:

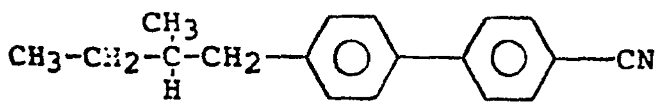

11. The three dimensional computer graphics video imaging system claimed in anyone of claims 8-10 wherein said liquid crystal cell comprises:

first and second spaced, substantially parallel plates having respective conductive electrodes on the facing surfaces thereof and respective alignment films on the facing surfaces thereof for controlling the alignment of a nematic liquid crystal material therebetween;

a sealing means connected between said plates to define an internal cavity therebetween; and

a mixture of a twisted nematic liquid crystal material and from about 1% to about 1.4% by weight of a chiral material substantially filling the internal cavity.

12. The three dimensional computer graphics video imaging system claimed in claim 11 wherein said plates are spaced from one another between 10 and 50 microns.

13. The three dimensional computer video graphics imaging system claimed in anyone of claims 8 - 12 wherein said computer video graphics imaging means provides a raster pattern of interlaced image half frames at a frequency of about 30 to about 45 frames per second and said chiral material is employed in said liquid crystal cell in an amount sufficient to reduce the switching response time of said cell to a value substantially less than about 11.1 milliseconds.

14. The three dimensional computer video graphics imaging system claimed in claim 13 wherein said switching response time is less than about 3 milliseconds.

15. A large-area, fast-switching liquid crystal cell comprising:

first and second spaced, substantially parallel plates having respective conductive electrodes on the facing surfaces thereof and respective alignment films on the facing surfaces thereof for controlling the alignment of a nematic liquid crystal material therebetween; and

a mixture of a twisted nematic liquid crystal host material and from about 1% to about 1.4% by weight of a chiral material substantially filling the internal cavity.

16. The larae-area, fast-switching liquid crystal cell claimed in claim 15 wherein said plates are spaced from one another between 10 and 50 microns.

17. The large-area, fast-switching liquid crystal cell claimed in claim 15 wherein said liquid crystal material comprises a mixture of:

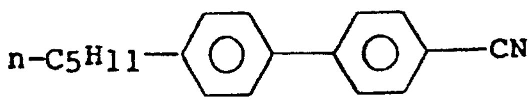

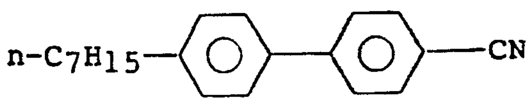

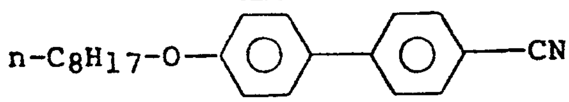

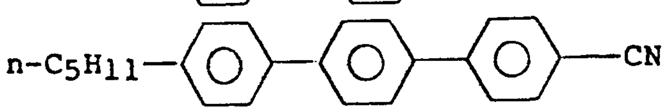

18. The large-area, fast-switching liquid crystal cell claimed in claim 15 wherein said chiral material comprises:

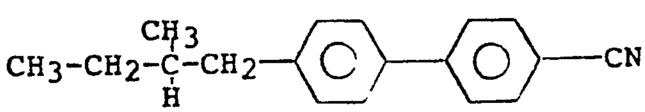

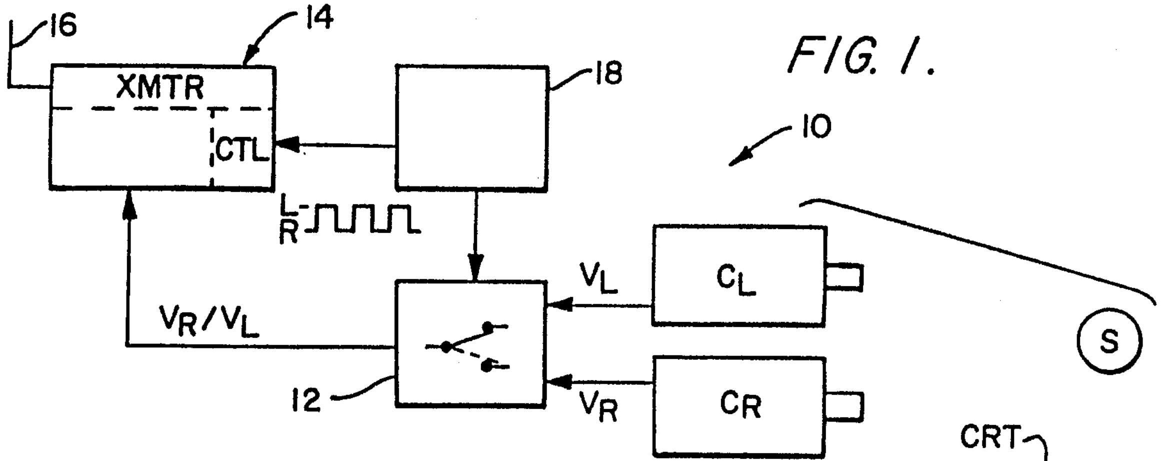
16
14
XMTR
CTL
18
10
L
R
VL
CL
VR/VL
12
VR
CR
S

FIG. 1.

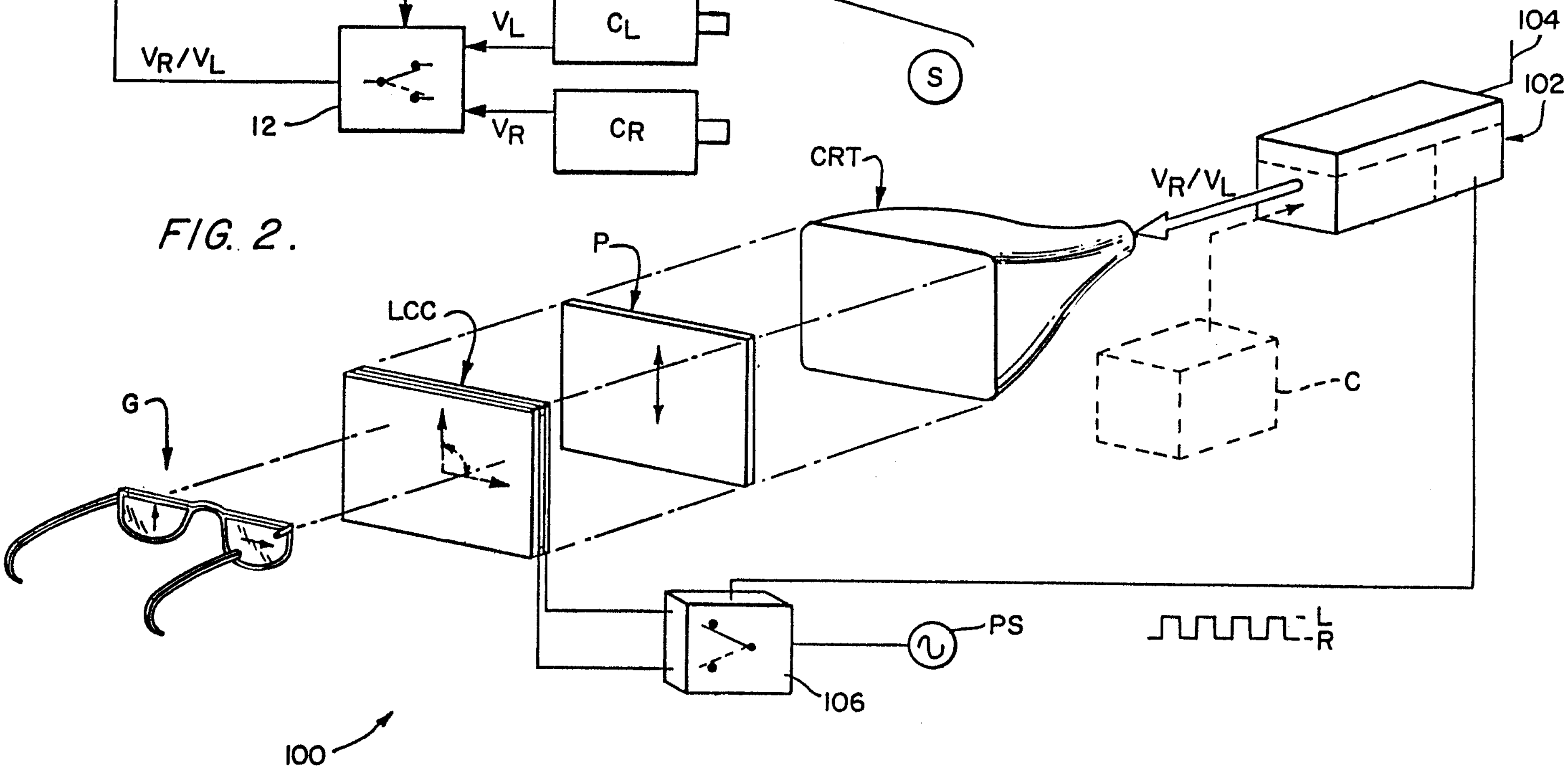
104
102
VR/VL
CRT
P
LCC
G
C
PS
L
R
106
100

FIG. 2.

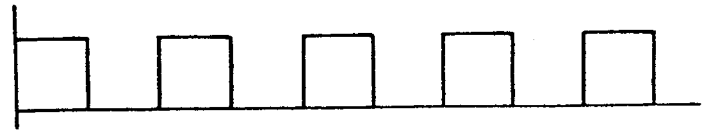

FIG. 3A.

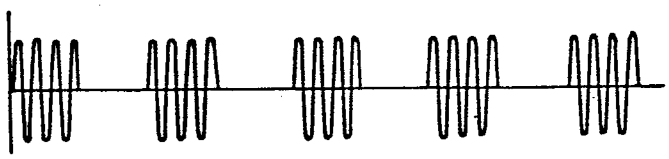

FIG. 3B.

LC

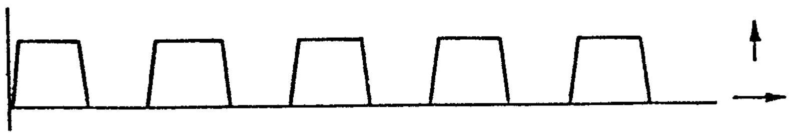

FIG. 3C.

LC

FIG. 4.

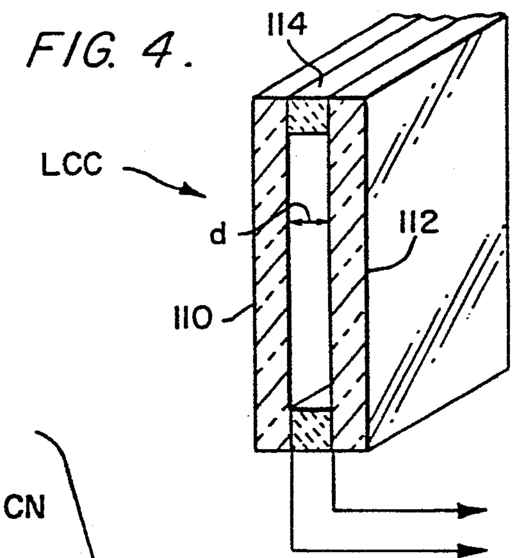


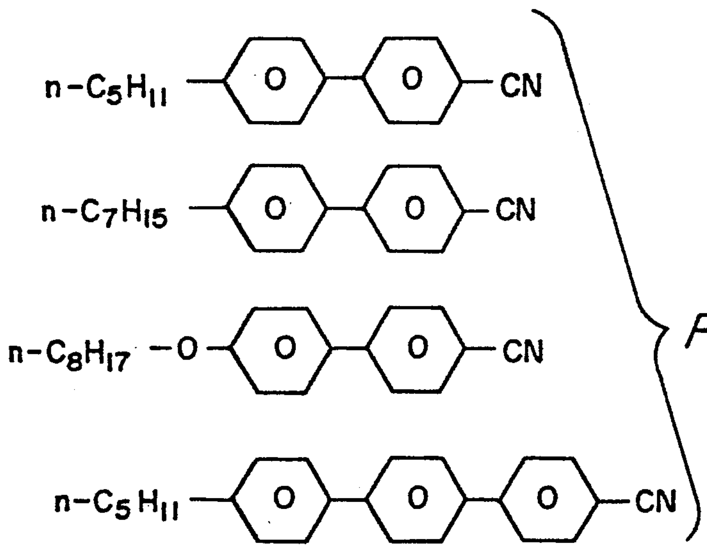

FIG. 5A.

FIG. 5B.